(19) Europäisches Patentamt / European Patent Office / Office européen des brevets

(11) **EP 2 454 576 B1**

(12) **EUROPEAN PATENT SPECIFICATION**

(45) Date of publication and mention
of the grant of the patent:
**14.06.2017 Bulletin 2017/24**

(51) Int Cl.:
**G01M 5/00** *(2006.01)* **G01H 1/14** *(2006.01)*
**G01N 29/04** *(2006.01)*

(21) Application number: **10752149.4**

(22) Date of filing: **19.07.2010**

(86) International application number:
**PCT/IB2010/001750**

(87) International publication number:
**WO 2011/007249 (20.01.2011 Gazette 2011/03)**

(54) **METHOD AND SYSTEM FOR MONITORING A THIN STRUCTURE**

VERFAHREN UND SYSTEM ZUR ÜBERWACHUNG EINER DÜNNEN STRUKTUR

PROCÉDÉ ET SYSTÈME DE SURVEILLANCE D'UNE STRUCTURE MINCE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **17.07.2009 IT MI20091272**

(43) Date of publication of application:
**23.05.2012 Bulletin 2012/21**

(73) Proprietors:
• **Vodafone Group PLC
Newbury
Berkshire RG14 2FN (GB)**
• **Vodafone Omnitel N.V.
Amsterdam (NL)**

(72) Inventors:
• **SIMI, Franco
I-30172 Mestre (VE) (IT)**
• **AGOSTI, Antonio
I-71121 Foggia (IT)**
• **BOSETTI, Paolo
I-38122 Trento (IT)**
• **PARZIANELLO, Giorgio
I-38123 Trento (IT)**

(74) Representative: **Cullinane, Marietta Bettina
Patentanwälte Müller & Schubert
Innere Wiener Straße 13
81667 München (DE)**

(56) References cited:
EP-A1- 1 070 961      EP-A1- 1 517 141
EP-A2- 1 953 521      WO-A2-2007/033258
WO-A2-2008/068761     DE-A1- 10 065 314
US-A- 5 327 358       US-A- 5 526 694
US-A- 5 602 761

**Description**

The present invention concerns a method and a system for monitoring a thin structure.

In particular, the present invention refers to a method and a system for monitoring a thin structure with constant mass over time and having a first free end and a second opposite end rigidly constrained to a stationary base element.

Structures of the aforementioned type can be, for example, a pole or an antennacarrying trellis, a lighthouse or a pole for wind turbines, a pole or trellis for lighting systems, and the like.

As it is known, such structures are dynamically stressed by wind action and by fatigue stress, for example by the rotary movement of the wind turbines. Over time, the dynamic action of the wind on the structure can determine unexpected fatigue-breaking. In particular, the presence of structural defects can determine, in certain conditions, formation of fracture lines, cracking on the welding and on other mobile parts of the structure, causing there to be a decrease of the rigidity of the structure with consequent reduction of its actual frequencies.

It is also useful to indicate the existence of other factors, apart from wind, such as ice, climbing of technical maintenance personnel, which do not determine fatigue on the structure but still stress it. Such factors, although they do not jeopardise the structure, determine an anomaly on the actual frequencies of such a structure.

In the state of the art, *ad hoc* monitoring solutions are known for single civil structures, where an operator watches over the structure and verifies, on the field, the state of the structure and the possible formation of cracks/fracture lines.

The aforementioned solutions are however unsuitable when there is a high number of structures to be monitored. In particular, the aforementioned solutions are unsuitable when it is necessary to simultaneously monitor a plurality of structures, even arranged in locations far from one another. For example, the aforementioned solutions cannot be applied to monitoring systems of antenna-carrying poles/trestles for mobile telephone communications, where the poles to be monitored cover substantially large areas. In this case, the use of an operator for each pole/trestle would be unacceptable with respect to the low management cost requirements that such systems must be able to satisfy.

EP1953521 discloses a system for detecting the onset of structural failure in a structural element subject to mechanical load, comprising a metering array, a signal processor, and an output processor. The metering array measures physical quantities associated with the structural element. The signal processor transforms the measured physical quantities into a series of sample mode spectra, and the output processor generates output as a function of the series of sample mode spectra. Methods are alos disclosed for detecting the onset of failure in a structural element subject to a mechanical load, for structural testing, and for structural health monitoring.

EP 1 517 141 A1 discloses a method for checking the stability of poles which are at least partially inserted into the ground. According to this method, at least one measuring element is attached to the surface of the pole. The measuring element may be an accelerometer. The vibration of the pole is stimulated by means of an impulse hammer or similar tool. The thus measured oscillation data for the pole is transferred to a frequency spectrum of the own frequency (Eigenfrequenz) of the pole oscillation. The thus obtained frequency spectrum for the individual pole is compared to the frequency data of the pole in its initial state. If the characteristic peaks are detected to have shifted from the resonance band of the intact pole to lower frequencies, this can be considered to be a hint to corrosion or reduction of stability of this pole.

The aim of the present invention is to provide a method and a system that make it possible to monitor a thin structure with low management costs while still maintaining a high efficiency in identifying possible cracks and fracture lines in the structure.

This aim is achieved with a method for monitoring a thin structure according to claim 1.

In accordance with a further aspect, this aim is achieved with a system for monitoring a thin structure according to claim 6.

In accordance with one embodiment, the method and the system foresee acquiring the acceleration signals emitted by the accelerometers applied to the structure, detecting the frequency peaks of such signals, processing the temporal variations of the peak frequencies to calculate their average and statistical reference values, verifying whether the peak frequencies, detected over successive time periods, are outside the statistical reference value and generating an error signal according to such a verification.

With respect to a common technique based upon a threshold indicator, based upon a predefined and arbitrary choice, the application of a statistical technique of calculating the average and statistical reference values of the peak frequencies makes it possible to identify, based upon the intrinsic variance of the acquired values, the width of the reference range inside which the measured peak frequencies can be considered "statistically stable". Such a technique can therefore be applied for simultaneously monitoring a high number of structures, like for example in the case of systems for antenna-carrying poles/trestles for mobile telephone communications and poles for wind turbines.

Further characteristics and advantages of the method and of the system according to the present invention shall become clearer from the following description of a preferred embodiment, given for indicating and not for limiting purposes, with reference to the attached figures in which:

- figure 1 shows a system for monitoring a thin structure in accordance with the present invention,

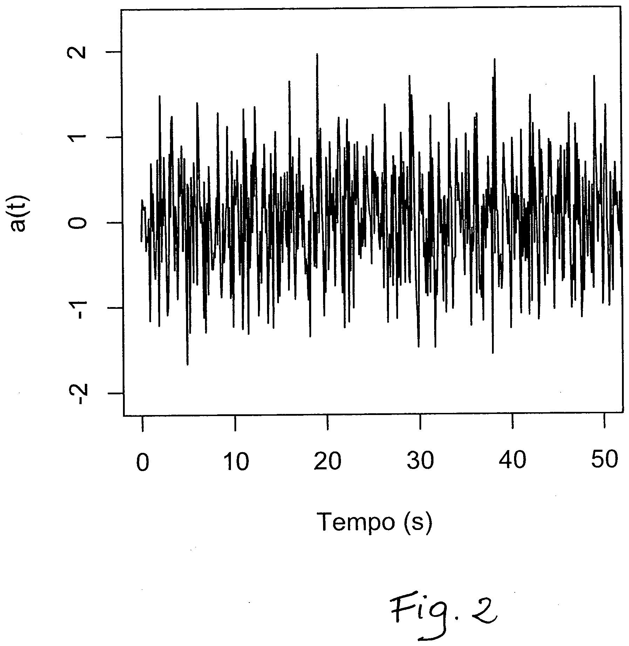

- figure 2 shows an acceleration signal emitted by an accelerometer of figure 1,

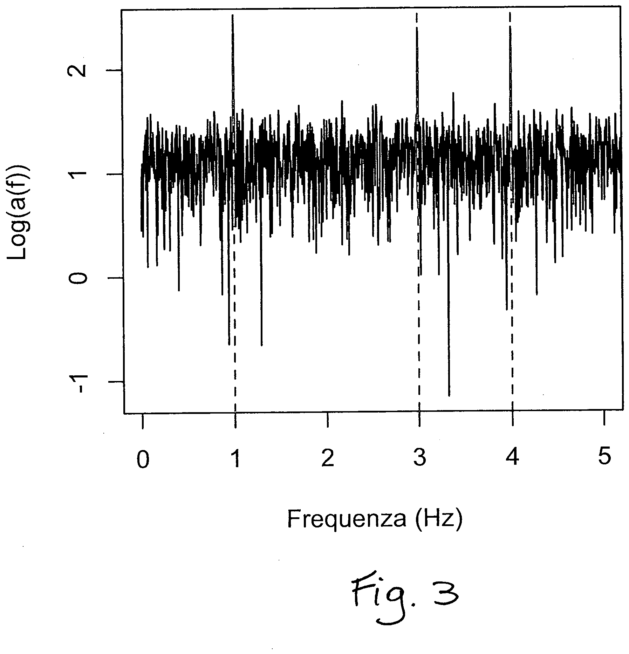

- figure 3 shows the frequency signal of the signal of figure 2 with the frequency peaks,

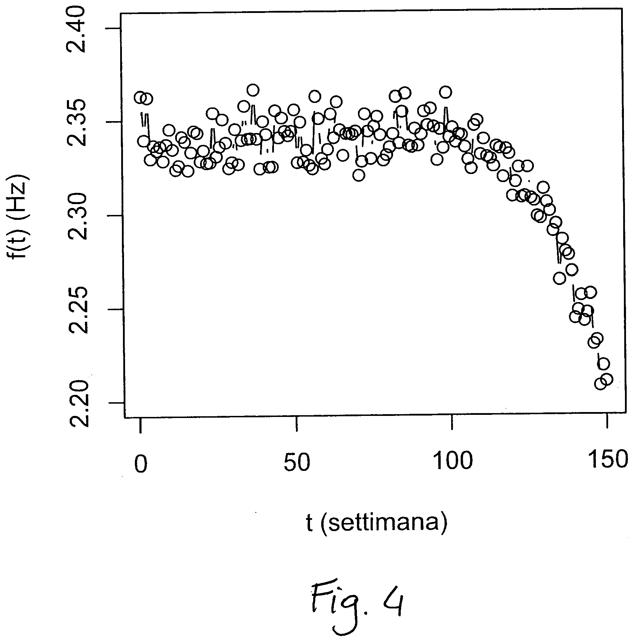

- figure 4 shows the temporal evolution of a peak frequency of the signal of figure 3,
- figure 5 shows an Exponentially Weighted Moving Average (EWMA) chart obtained from the signal of figure 4.

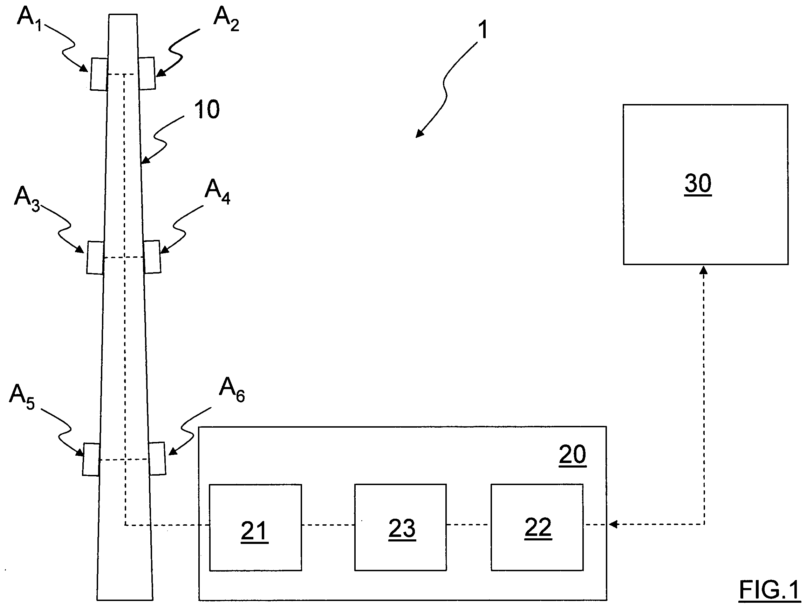

With reference to figure 1, reference numeral 1 globally indicates a system for monitoring a thin structure 10, having a constant mass M over time and having a first free end 10a and a second opposite end 10b rigidly constrained to a stationary base element 11, representing the foot of structure 10.

Structure 10 for example can be a pole or an antenna-carrying trellis, a lighthouse, a pole for wind turbines, a pole for lighting systems and the like, dynamically stressed by wind action.

To structure 10, a plurality N of accelerometers $A_n$, with n=1...N is associated.

Each accelerometer $A_n$ is suitable for emitting an acceleration signal $a_n(t)$ representative of the acceleration detected by the accelerometer itself.

In particular, each accelerometer $A_n$ detects the values of the two acceleration components $a_x$, $a_y$ respectively on the axes X and Y and converts such components into an acceleration signal with magnitude $\alpha$ and phase $\varphi$, where $\alpha$ represents the intensity of the detected acceleration and the step $\varphi$ represents the angle of the direction of maximum acceleration.

In accordance with one embodiment, accelerometers $A_n$ comprise accelerometers MEMS fixed to structure 10 in suitable positions, selected so as to amplify the width of the oscillations of structure 10 itself.

Accelerometers $A_n$ are in signal communication with an acquisition and processing unit 20.

Acquisition and processing unit 20 comprises a signal input interface 21 coupled with accelerometers $A_n$ to receive the acceleration signals $a_n(t)$ emitted by accelerometers $A_n$, processing means 23 coupled with signal input interface 21 to receive and process the acceleration signals $a_n(t)$ emitted by accelerometers $A_n$ and generate in output a plurality of output signals representative of the state of structure 10 and a signal output interface 22 coupled with processing means 23 to receive the output signals and in signal communication with a remote unit 30 to transmit such output signals to remote unit 30.

In accordance with one embodiment, signal input interface 21 comprises a multichannel acquisition and analog/digital conversion card with at least 10 bit/channel and frequency fc suitable for the actual frequency of structure 10 for acquiring and sampling acceleration signals $a_n(t)$ emitted by accelerometers $A_n$.

In accordance with one embodiment, signal output interface 22 comprises a radio mobile communication card, for example UMTS or GPRS, capable of transmitting the output signals to the remote unit 30.

Acquisition unit 20 is arranged near to structure 10, for example at the base of structure 10.

Through signal input interface 21, acquisition unit 20 acquires acceleration signals $a_n(t)$ emitted by the N accelerometers $A_n$ in a first time period $\Delta t_1$, in the example comprised between $t_0$ and $t_1$, hereafter called first acceleration signals. For example, the three accelerometers $A_1, A_2, A_3$, over the time period $t_0-t_1$, emit the first acceleration signals $a_1(t)$, $a_2(t)$ and $a_3(t)$, respectively.

Processing means 23 are adapted for receiving first acceleration signals $a_n(t)$ and applying, to first acceleration signals $a_n(t)$, a transformation function in the frequency domain, for example the Fast Fourier transform (FFT), to generate corresponding first frequency signals $a_n(f)$, for example first frequency signals $a_1(f)$, $a_2(f)$ and $a_3(f)$ representative of the frequency components of relative first acceleration signals $a_1(t)$, $a_2(t)$ and $a_3(t)$.

Processing means 23 are also adapted for detecting the peak of first frequency signals $a_1(f)$, $a_2(f)$ and $a_3(f)$, called first frequency peaks, where the term first frequency peaks indicates a set of N frequencies corresponding to the N frequency peaks present in respective first frequency signals $a_1(f)$, $a_2(f)$ and $a_3(f)$. For example, frequency signal $a_1(f)$ can have a peak at the peak frequencies $f_1$ and $f_2$.

For each peak detected in each first frequency signal $a_1(f)$, $a_2(f)$ and $a_3(f)$, processing means 23 are adapted for determining the temporal variations of the corresponding peak frequency in a predefined range of frequency values over time period $t_0-t_1$ so as to obtain temporal evolution f(t) of each peak frequency.

For example, taking frequency signal $a_1(f)$ with first peaks on peak frequencies $f_1$ and $f_2$, processing means 23 detect the temporal variations of peak frequencies $f_1$ and $f_2$ in a predefined range of frequency values $\Delta f$ so as to obtain temporal evolution $f_1(t)$ and $f_2(t)$ of peak frequencies $f_1$ and $f_2$.

Processing means 23 are also adapted for processing the temporal variations of the peak frequencies to calculate, for each of the frequency peaks, an average peak frequency reference value representative of the oscillation frequency of the structure and a respective statistical value representative of the frequency variations with respect to the average peak frequency reference value to define a respective range of frequency values around the average value.

For example, processing means 23 process the temporal variations of peak frequencies $f_1$ and $f_2$, i.e. temporal

evolution $f_1(t)$ and $f_2(t)$ of peak frequencies $f_1$ and $f_2$, to calculate an average peak frequency reference value $fmean_1$ and $fmean_2$ and a respective statistical value $fvar_1$ and $fvar_2$ to define a respective range of frequency values around the average value.

In order to monitor the state of structure 10, processing means 23 acquire acceleration signals $a_n(t)^*$ emitted by N accelerometers $A_n$ in a second time period $\Delta t_2$, in the example comprised between $t_1$ and $t_2$, subsequent to the first time period $\Delta t_1$, hereafter called second acceleration signals. For example, the three accelerometers $A_1, A_2, A_3$ emit, over time period $t_1$-$t_2$, second acceleration signals respectively $a_1(t)^*$, $a_2(t)^*$ and $a_3(t)^*$.

Second acceleration signals $a_n(t)^*$ are processed by processing means 23 applying a transformation function in the frequency domain, for example the fast Fourier transform (FFT), to generate corresponding second frequency signals $a_1(f)^*$, $a_2(f)^*$ and $a_3(f)^*$ representative of the frequency components of the relative first acceleration signals $a_1(t)^*$, $a_2(t)^*$ and $a_3(t)^*$.

In accordance with one embodiment, the transformation function in the frequency domain applied to second acceleration signals $a_n(t)^*$ corresponds to the transformation function in the frequency domain applied to first acceleration signals $a_n(t)$. Subsequently, processing means 23 detect, at predetermined time periods $\Delta t$, the peak of second frequency signals $a_1(f)^*$, $a_2(f)^*$ and $a_3(f)^*$, called second frequency peaks, where the term second frequency peaks indicates a set of M frequencies corresponding to the M frequency peaks present in respective second frequency signals $a_1(f)^*$, $a_2(f)^*$ and $a_3(f)^*$ and verify, with respect to each calculated average value of the peak frequencies of first frequency signals $a_1(f)$, $a_2(f)$, $a_3(f)$, whether the corresponding peak frequency of the second frequency signal is outside of the respective range of frequency values and generate an error signal $s_{err}$ in output as a function of the outcome of such a verification.

Error signal $s_{err}$, received by signal output interface 22, is transmitted to remote unit 30. According to error signal $s_{err}$, technical intervention can be required to check structure 10 or remote unit 30 can send to acquisition and processing unit 20 a request to send the signals processed by processing means 23.

For example, processing means 23 detect, at time periods $\Delta t$, peak of frequency $f_1^*$ of second frequency signal $a_1(f)^*$ and verify, with respect to the average value $fmean_1$ of peak frequency $f_1$ of frequency signal $a_1(f)$, whether corresponding peak frequency $f_1^*$ of frequency signal $a_1(f)^*$ is outside of the respective frequency range and generate an error signal $s_{err}$ as a function of the outcome of such a verification.

Basically, processing means 23 verify, at time ranges $\Delta t$,

$$\text{if} \qquad f_1^* < fmean_1 - fvar_1 \text{ or } f_1^* > fmean_1 + fvar_1 \qquad \text{or}$$

$$\text{if} \qquad fmean_1 - fvar_1 \leq f_1^* \leq fmean_1 + fvar_1$$

If the condition

$$f_1^* < fmean_1 - fvar_1 \text{ or } f_1^* > fmean_1 + fvar_1 \text{ is verified}$$

then processing means 23 generate an error signal $s_{err}$.

Indeed, in critical conditions, the presence of structural defects determines a reduction of the effective useful section of structure 10 and, consequently, a reduction of its structural rigidity. This reduction determines a consequent reduction of the resonant frequencies of the structure itself and an increase of the intensity of the accelerations detected by accelerometers $A_n$.

In order to minimise the possibility of obtaining false positives, due to exceptional events not possible to be classified as structural defects, like for example snow, ice, weight of the maintenance worker, the value of peak frequency $f_1^*$ to compare can be obtained by calculating an average of peak frequency values $f_1^*$ over time period $t_1$-$t_2$.

In particular, for each peak detected in each second frequency signal $a_1(f)^*$, $a_2(f)^*$ and $a_3(f)^*$, processing means 23 detect the temporal variations of the corresponding peak frequency over time period $t_1$-$t_2$ to calculate, for each of second frequency peaks, an average peak frequency reference value.

For example, temporal variations $f_1(t)^*$ and $f_2(t)^*$ of peak frequencies $f_1^*$ and $f_2^*$ can be processed to calculate an average peak frequency reference value $fmean_1^*$ and $fmean_2^*$.

In this case processing means 23 verify, with respect to average value $fmean_1$ of peak frequency $f_1$ of frequency signal $a_1(f)$, whether the corresponding average peak frequency reference value $fmean_1^*$ of frequency signal $a_1(f)^*$ is outside of the respective frequency range and generates an error signal $s_{err}$ as a function of the outcome of such a verification.

Basically, processing means 23 verify

if fmean₁*<fmean₁-fvar₁ or fmeans₁*>fmean₁+fvar₁     or

if fmean₁-fvar₁ ≤fmean₁*≤fmean₁+fvar₁.

If the condition

fmean₁*<fmean₁-fvar₁ or fmeans₁*>fmean₁+fvar₁ is verified then processing means 23

generate an error signal $s_{err}$.

In this case, remote unit 30, on receiving error signal $s_{err}$, can send to acquisition and processing unit 20 a request to send temporal variation signal $f_1(t)^*$ and $f_2(t)^*$ of peak frequencies $f_1^*$ and $f_2^*$ of second frequency signal $a_1(f)^*$.

In accordance with one embodiment, signal output interface 22 is adapted for transmitting, over a first channel, error signal $s_{err}$ and, over a second separate channel, temporal variation signals $f_1(t)^*$ and $f_2(t)^*$ of peak frequencies $f_1^*$ and $f_2^*$ of second frequency signals $a_1(f)^*$.

Based upon the temporal evolution of the peak frequencies, an operator can evaluate whether it is necessary for a technical worker to intervene so as to check the structure 10.

In accordance with one embodiment, the average value of the peak frequency values $f_1^*$ can be calculated by using a moving average function in which a value at the time i depends upon the value at time i and upon the value at time i-1. For example, a EWMA (Exponentially Weighted Moving Average) function can be used that applies an exponentially decreasing weight over time , to each value at time i-1, so as to consider to a greater extent the most recent values in time without however omitting older values. An example of EWMA function is given by the following relationship:

$$z_i = \lambda \overline{f}_i + (1-\lambda)z_{i-1}$$

$$z_0 = \mu_0$$

where

$i$ is the progressive group index (in which each group consists of $n$ individual measurements of peak frequency $f_i$ with an average $\overline{f}_i$,

$\lambda$ is a constant with $0 < \lambda \le 1$.

Error signal $s_{err}$ is generated each time the value of $z_i$ is outside control limits $LCL_i$ (Lower Control Limit), $UCL_i$ (Upper Control Limit) where $LCL_i = \mu_0 - L\sigma\sqrt{\frac{\lambda}{n(2-\lambda)}\left[1-(1-\lambda)^{2i}\right]}$ represents the smallest possible statistical value with the process within the limits, $UCL_i = \mu_0 + L\sigma\sqrt{\frac{\lambda}{n(2-\lambda)}\left[1-(1-\lambda)^{2i}\right]}$ represents the greatest possible statistical value with the process within the limits, where

L     is the width of the control limits (typically L=3),
$\sigma$     is the variance of the measured values $f_i$.

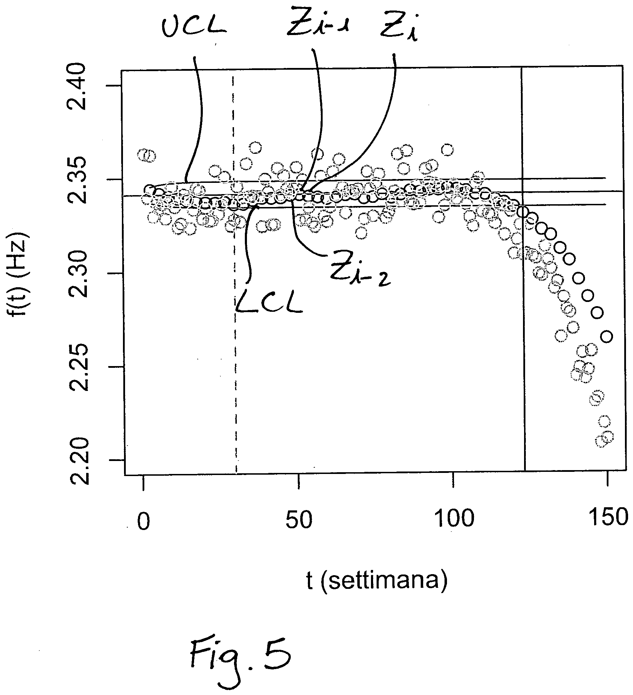

The application of the EWMA function makes it possible to generate a EWMA control card in which there is the temporal evolution of each peak frequency. Figure 5 shows an example of EWMA control card. In this case, remote unit 30, when it receives error signal $s_{err}$, can send a request to send the values of the EWMA control card to acquisition and processing unit 20.

Since error signal $s_{err}$ is generated at structure 10 to be monitored and sent to a remote unit 20 in which the possible processing of the signals processed by processing means 23 occurs, the system and the method of the present invention can be advantageously used for monitoring a plurality of structures to be monitored even spread over vast areas of land. In this way, pluralities of structures to be monitored can be monitored, even simultaneously and continuously.

According to a further aspect, the invention concerns an information technology product that can be directly loaded into the memory of a numerical processing device, comprising portions of program code able to carry out the method of the invention when it is run on the numerical processing device.

As it should be understood from what has been described thus far, the method and the system according to the present invention make it possible to overcome the drawbacks mentioned with reference to the prior art. In this case, the present invention makes it possible to identify, based upon the intrinsic variance of the acquired values, the width of the reference range inside which the measured peak frequencies can be considered "statistically stable". Such a technique can therefore be applied for monitoring a high number of structures simultaneously, like for example in the case of antenna-carrying pole/trestle systems for mobile telephone communications and poles for wind turbines.

**Claims**

1.  Method for monitoring a thin structure (10), having a constant mass over time and having a first free end and a second opposite end rigidly constrained to a stationary base element, wherein a plurality of accelerometers ($A_n$) are associated with said structure (10), each accelerometer ($A_n$) being suitable for emitting an acceleration signal ($a_n(t)$) representative of the acceleration detected by the accelerometer, said method comprising the steps of:

    a) acquiring first ($a_n(t)$) and second ($a_n(t)^*$) acceleration signals emitted by the accelerometers ($A_n$) respectively in a first ($\Delta t_1$) and in a second ($\Delta t_2$) time period, said second time period ($\Delta t_2$) following after said first time period ($\Delta t_1$),
    b) applying a transformation function in the frequency domain (FTT) to the first ($a_n(t)$) and second ($a_n(t)^*$) acceleration signals to generate corresponding first ($a_n(f)$) and second ($a_n(f)^*$) frequency signals representative of the frequency components of the relative first ($a_n(t)$) and second ($a_n(t)^*$) acceleration signals,
    c) detecting first frequency peaks ($f_n$) of the first frequency signals ($a_n(f)$), said first frequency peaks representing the frequencies of the frequency peaks of said first frequency signals ($a_n(f)$) in said first time period,
    d) determining the temporal variations of the peak frequencies of each of the first frequency peaks ($f_n$) to obtain the temporal evolution ($f_n(t)$) of each of the first frequency peaks ($f_n$) in a predefined range of frequency values over said first time period, **characterised in that** the method further comprises:

    e) processing said temporal variations of the peak frequencies to calculate, for each of the frequency peaks ($f_n$), an average peak frequency reference value ($fmean_n$) representative of the oscillation frequency of the structure (10) and a respective statistical value ($fvar_n$) representative of the frequency variations with respect to said average peak frequency reference value ($fmean_n$) to define a respective range of frequency values around said average value ($fmean_n$),
    f) detecting, at predetermined time periods ($\Delta t$) in said second time period, second frequency peaks ($f_n^*$) of the second frequency signals ($a_n(f)^*$), said second frequency peaks representing the frequencies of the frequency peaks of said second frequency signals ($a_n(f)^*$),
    g) verifying, with respect to each calculated average value of the peak frequencies ($fmean_n$) of the first peak frequency signals ($a_n(f)$), whether the corresponding peak frequency ($f_n^*$) of the second frequency signal ($a_n(f)^*$) is outside of the respective range of frequency values around the respective average value ($fmean_n$),
    h) generating an error signal ($s_{err}$) according to the outcome of said verification step g).

2.  Method according to claim 1, wherein said step g) comprises step g1) of calculating the average value ($fmean_n^*$) of the peak frequency values ($f_n(t)^*$) in said second time period ($\Delta t_2$), to obtain said corresponding peak frequency ($f_n^*$) of the second frequency signal ($a_n(f)^*$).

3.  Method according to claim 2, wherein said step g1) comprises the step of determining, for each peak detected in each second frequency signal ($a_n(f)^*$), the temporal variations of the corresponding peak frequency ($f_n(t)^*$) in said second time period ($\Delta t_2$) to calculate, for each of the second frequency peaks ($f_n^*$), said average value ($fmean_n^*$) of the peak frequency values ($f_n(t)^*$) in said second time period ($\Delta t_2$).

4.  Method according to claim 2 or 3, wherein said step g) comprises step g2) of verifying, with respect to each calculated average value of the peak frequencies ($fmean_n$) of the first peak frequency signals ($a_n(f)$), whether the corresponding calculated average peak frequency value ($fmean_n^*$) of the second frequency signal ($a_n(f)^*$) is outside of the respective range of frequency values around the respective average value ($fmean_n$).

**5.** Method according to any one of claims 1 to 4, wherein in said step g) said corresponding peak frequency ($f_n$*) of the second frequency signal ($a_n(f)$*) is calculated through an EWMA function.

**6.** System (1) for monitoring a thin structure (10), having a constant mass over time an having a first free end (10a) and a second opposite end (10b) rigidly constrained to a stationary base element (11), said system (1) comprising:

- a plurality of accelerometers ($A_n$) associated with said structure (10), each accelerometer ($A_n$) being suitable for emitting an acceleration signal ($a_n(t)$) representative of the acceleration detected by the accelerometer,
- an acquisition and processing unit (20) in signal communication with said accelerometers ($A_n$) and positioned at the structure (10) to be monitored,
- a remote unit (30) in signal communication with said acquisition and processing unit (20), wherein
- said acquisition and processing unit (20) comprises:

- a signal input interface (21) coupled with the accelerometers ($A_n$) to receive the acceleration signals ($a_n(t)$) emitted by the accelerometers ($A_n$),
- processing means (23) coupled with the signal input interface (21) to receive and process the acceleration signals ($a_n(t)$) emitted by the accelerometers ($A_n$) and generate in output a plurality of output signals representative of the state of the structure (10),
- a signal output interface (22) coupled with the processing means (23) to receive the output signals and in signal communication with said remote unit (30) to transmit said output signals to the remote unit (30), said processing means (23) configured to:

- acquire first ($a_n(t)$) and second ($a_n(t)$*) acceleration signals emitted by the accelerometers ($A_n$) respectively in a first ($\Delta t_1$) and in a second ($\Delta t_2$) time period, said second time period ($\Delta_{t2}$) following after said first time period ($\Delta t_1$),
- apply a transformation function in the frequency domain (FTT) to the first ($a_n(t)$) and second ($a_n(t)$*) acceleration signals to generate corresponding first ($a_n(f)$) and second ($a_n(f)$*) frequency signals representative of the frequency components of the relative first ($a_n(t)$) and second ($a_n(t)$*) acceleration signals,
- detect first frequency peaks ($f_n$) of the first frequency signals ($a_n(f)$), said first frequency peaks representing the frequencies of the frequency peaks of said first frequency signals ($a_n(f)$) in said first time period,
- determine the temporal variations of the peak frequencies of each of the first frequency peaks ($f_n$) to obtain the temporal evolution ($f_n(t)$) of each of the first frequency peaks ($f_n$) in a predefined range of frequency values over said first time period, **characterised in that** said processing means (23) are further configured to:

- process said temporal variations of the peak frequencies to calculate, for each of the frequency peaks ($f_n$), an average peak frequency reference value (fmean$_n$) representative of the oscillation frequency of the structure (10) and a respective statistical value (fvar$_n$) representative of the frequency variations with respect to said average peak frequency reference value (fmean$_n$) to define a respective range of frequency values around said average value (fmean$_n$),
- detect at predetermined time periods ($\Delta t$) in said second time period, second frequency peaks ($f_n$*) of the second frequency signals ($a_n(f)$*), said second frequency peaks representing the frequencies of the frequency peaks of said second frequency signals ($a_n(f)$*),
- verify, with respect to each calculated average value of the peak frequencies (fmean$_n$) of the first peak frequency signals ($a_n(f)$), whether the corresponding peak frequency ($f_n$*) of the second frequency signal ($a_n(f)$*) is outside of the respective range of frequency values around the respective average value (fmean$_n$),
- generate an error signal ($s_{err}$) according to the outcome of said verification step g),
- transmit from said signal output interface (22) said error signal ($s_{err}$) to said remote unit (30).

**7.** System (1) according to claim 6, wherein said processing means (23) are configured to calculate the average value (fmean$_n$*) of the peak frequency values ($f_n(t)$*) in said second time period ($\Delta t_2$), to obtain said corresponding peak frequency ($f_n$*) of the second frequency signal ($a_n(f)$*).

**8.** System (1) according to claim 7, wherein said processing means (23) are configured to

- determine, for each peak detected in each second frequency signal $(a_n(f)^*)$, the temporal variations of the corresponding peak frequency $(f_n(t)^*)$ in said second time period $(\Delta t_2)$ and
- calculate, for each of the second frequency peaks $(f_n^*)$, said average value $(fmean_n^*)$ of the peak frequency values $(f_n(t)^*)$ in said second time period $(\Delta t_2)$.

**9.** System (1) according to any one of claims 6 to 8, wherein said processing means (23) are configured to apply an exponentially weighted moving average (EWMA) function to calculate said corresponding peak frequency $(f_n^*)$ of the second frequency signal $(a_n(f)^*)$.

**Patentansprüche**

**1.** Verfahren zum Überwachen einer dünnen Struktur (10), die eine konstante Masse über Zeit hat und ein erstes freies Ende und ein gegenüberliegendes zweites Ende aufweist, das starr an einem stationären Basiselement gehalten ist, wobei eine Vielzahl von Beschleunigungssensoren $(A_n)$ mit der Struktur (10) verbunden sind, wobei jeder Beschleunigungssensor $(A_n)$ dazu geeignet ist, ein Beschleunigungssignal $(a_n(t))$ auszugeben, das für die Beschleunigung repräsentativ ist, die durch den Beschleunigungssensor detektiert wurde, wobei das Verfahren die Schritte umfasst:

a) Erfassen von ersten $(a_n(t))$ und zweiten $(a_n(t)^*)$ Beschleunigungssignalen, die durch die Beschleunigungssensoren $(A_n)$ jeweils in einem ersten $(\Delta t_1)$ und einem zweiten Zeitraum $(\Delta t_2)$ ausgegeben werden, wobei der zweite Zeitraum $(\Delta t_2)$ nach dem ersten Zeitraum $(\Delta t_1)$ folgt,
b) Anwenden einer Übertragungsfunktion im Frequenzbereich (FTT) auf die ersten $(a_n(t))$ und zweiten $(a_n(t)^*)$ Beschleunigungssignale, um korrespondierende erste $(a_n(f))$ und zweite Frequenzsignale $(a_n(f)^*)$ zu erzeugen, die für die Frequenzkomponenten der relativen ersten $(a_n(t))$ und zweiten Beschleunigungssignale $(a_n(t)^*)$ repräsentativ sind,
c) Detektieren erster Frequenzpeaks $(f_n)$ der ersten Frequenzsignale $(a_n(f))$, wobei die ersten Frequenzpeaks die Frequenzen der Frequenzpeaks der ersten Frequenzsignale $(a_n(f))$ in dem ersten Zeitraum repräsentieren,
d) Bestimmen der zeitlichen Variationen der Peak-Frequenzen von jedem der ersten Frequenzpeaks $(f_n)$, um die zeitliche Entwicklung $(f_n(t))$ von jedem der ersten Frequenzpeaks $(f_n)$ in einem vordefinierten Bereich von Frequenzwerten über den ersten Zeitraum zu erhalten, **dadurch gekennzeichnet, dass** das Verfahren weiterhin umfasst:

e) Verarbeiten der zeitlichen Variationen der Peak-Frequenzen, um für jeden der Frequenzpeaks $(f_n)$ eine mittlere Peak-Frequenz-Referenzwert $(fmean_n)$, der repräsentativ ist für die Oszillationsfrequenz der Struktur (10), und einen entsprechenden statistischen Wert $(fvar_n)$, der repräsentativ für die Frequenzvariationen bezüglich des mittleren Peak-Frequenz-Referenzwertes $(fmean_n)$ ist, zu berechnen, um einen entsprechenden Bereich von Frequenzwerten um den Mittelwert $(fmean_n)$ zu definieren,
f) Detektieren an vorbestimmten Zeiträumen $(\Delta t)$ in dem zweiten Zeitraum, zweite Frequenzpeaks $(f_n^*)$ der zweiten Frequenzsignale $(a_n(f)^*)$, wobei die zweiten Frequenzpeaks die Frequenzen der Frequenzpeaks der zweiten Frequenzsignale $(a_n(f)^*)$ repräsentieren,
g) Verifizieren bezüglich jedes berechneten Mittelwertes der Peak-Frequenzen $(fmean_n)$ des ersten Peak-Frequenzsignals $(a_n(f))$, ob die korrespondierende Peak-Frequenz $(f_n^*)$ des zweiten Frequenzsignales $(a_n(f)^*)$ außerhalb des entsprechenden Bereiches von Frequenzwerten um den entsprechenden Mittelwert $(fmean_n)$ liegt,
h) Erzeugen eines Fehlersignals $(s_{err})$ entsprechend dem Ergebnis des Verifizierungsschrittes g).

**2.** Verfahren nach Anspruch 1, wobei der Schritt g) Schritt g1) der Berechnung eines Mittelwertes $(fmean_n^*)$ der Peak-Frequenzwerte $(f_n(t)^*)$ in dem zweiten Zeitraum $(\Delta t_2)$ umfasst, um die korrespondierende Peak-Frequenz $(f_n^*)$ des zweiten Frequenzsignals $(a_n(f)^*)$ zu erhalten.

**3.** Verfahren nach Anspruch 2, wobei der Schritt g1) den Schritt des Bestimmens der zeitlichen Variationen der korrespondierenden Peak-Frequenz $(f_n(t)^*)$ in dem zweiten Zeitraum $(\Delta t_2)$ für jeden detektierten Peak in jedem zweiten Frequenzsignal $(a_n(f)^*)$, um für jeden der zweiten Frequenzpeaks $(f_n^*)$ den Mittelwert $(fmean_n^*)$ der Peak-Frequenzwerte $(f_n(t)^*)$ in dem zweiten Zeitraum $(\Delta t_2)$ zu berechnen.

**4.** Verfahren gemäß Anspruch 2 oder 3, wobei der Schritt g) Schritt g2) des Verifizierens bezüglich jedes berechneten Mittelwertes der Peak-Frequenzen $(fmean_n)$ der ersten Peak-Frequenzsignale $(a_n(f))$ umfasst, ob der korrespondierende berechnete mittlere Peak-Frequenzwert $(fmean_n{}^*)$ des zweiten Frequenzsignals $(a_n(f)^*)$ außerhalb des entsprechenden Bereiches von Frequenzwerten um den entsprechenden Mittelwert $(fmean_n)$ liegt.

5. Verfahren nach einem der Ansprüche 1 bis 4, wobei in dem Schritt g) die korrespondierende Peak-Frequenz $(f_n{}^*)$ des zweiten Frequenzsignals $(a_n(f)^*)$ durch eine EWMA-Funktion berechnet wird.

6. System (1) zur Überwachung einer dünnen Struktur (10), die eine konstante Masse über Zeit hat und die ein erstes freies Ende (10a) und ein zweites gegenüberliegendes Ende (10b) aufweist, das fest an einem stationären Basiselement (11) gehalten ist, wobei das System umfasst:

- eine Vielzahl von Beschleunigungssensoren $(A_n)$, die mit der Struktur (10) verbunden sind, wobei jeder Beschleunigungssensor $(A_n)$ geeignet ist, ein Beschleunigungssignal $(a_n(t))$ auszugeben, das für die Beschleunigung, die durch den Beschleunigungssensor detektiert wurde, repräsentativ ist,
- eine Erfassungs- und Verarbeitungseinheit (20), die in Signalkommunikation mit den Beschleunigungssensoren $(A_n)$ ist und an der Struktur (10), die überwacht werden soll, positioniert ist,
- eine Ferneinheit (30) in Signalkommunikation mit der Erfassungs- und Verarbeitungseinheit (20), wobei
- die Erfassungs- und Verarbeitungseinheit umfasst:

- eine Signaleingabeschnittstelle (21) verbunden mit den Beschleunigungssensoren $(A_n)$, um das Beschleunigungssignal $(a_n(t))$, das durch die Beschleunigungssensoren $(A_n)$ ausgegeben wird, zu empfangen,
- Verarbeitungsmittel (23), die mit der Signaleingabeschnittstelle (21) verbunden sind, um die Beschleunigungssignale $(a_n(t))$, die von den Beschleunigungssensoren $(A_n)$ ausgegeben werden, zu empfangen und zu verarbeiten und als Ausgabe eine Vielzahl von Ausgabesignalen, die für den Zustand der Struktur (10) repräsentativ sind, zu erzeugen,
- eine Signalausgabeschnittstelle (22), die mit den Verarbeitungsmitteln (23) verbunden ist, um die Ausgabesignale zu empfangen und in Signalkommunikation mit der Ferneinheit (30) ist, um die Ausgabesignale an die Ferneinheit (30) zu übertragen, wobei die Verarbeitungsmittel (23) konfiguriert sind, um:

- erste $(a_n(t))$ und zweite $(a_n(t)^*)$ Beschleunigungssignale, die von den Beschleunigungssensoren $(A_n)$ jeweils in einem ersten Zeitraum $(\Delta t_1)$ und in einem zweiten Zeitraum $(\Delta t_2)$ ausgegeben werden, zu erfassen, wobei der zweite Zeitraum $(\Delta_{t2})$ nach dem ersten Zeitraum $(\Delta t_1)$ folgt,
- Anwenden einer Übertragungsfunktion im Frequenzbereich (FTT) auf die ersten $(a_n(t))$ und zweiten $(a_n(t)^*)$ Beschleunigungssignale, um korrespondierende erste $(a_n(f))$ und zweite $(a_n(f)^*)$ Frequenzsignale zu erzeugen, die repräsentativ für die Frequenzkomponenten der relativen ersten $(a_n(t))$ und zweiten $(a_n(t)^*)$ Beschleunigungssignale sind,
- Detektieren erster Frequenzpeaks $(f_n)$ der ersten Frequenzsignale $(a_n(f))$, wobei die ersten Frequenzpeaks die Frequenzen der Frequenzpeaks der ersten Frequenzsignale $(a_n(f))$ in dem ersten Zeitraum repräsentieren,
- Bestimmen der zeitlichen Variationen von Peak-Frequenzen von jedem der ersten Frequenzpeaks $(f_n)$, um die zeitliche Entwicklung $(f_n(t))$ jedes der ersten Frequenzpeaks in einem vorbestimmten Bereich von Frequenzwerten über den ersten Zeitraum zu erhalten, **dadurch gekennzeichnet, dass** die Verarbeitungsmitteln (23) weiterhin konfiguriert sind, um:

- die zeitlichen Variationen der Peak-Frequenzen zu verarbeiten, um, für jeden der Frequenzpeaks $(f_n)$ einen mittleren Peak-Frequenz-Referenzwert $(fmean_n)$, der repräsentativ ist für die Oszillationsfrequenz der Struktur (10), und einen entsprechenden statistischen Wert $(fvar_n)$ zu berechnen, der repräsentativ für die Frequenzvariationen bezüglich des mittleren Peak-Frequenz-Referenzwertes $(fmean_n)$ ist, um einen entsprechenden Bereich von Frequenzwerten um den Mittelwert $(fmean_n)$ zu definieren,
- an vorbestimmten Zeiträumen $(\Delta t)$ in dem zweiten Zeitraum zweite Frequenzpeaks $(f_n{}^*)$ der zweiten Frequenzsignale $(a_n(f)^*)$, zu detektieren, wobei die zweiten Frequenzpeaks für die Frequenzen der Frequenzpeaks der zweiten Frequenzsignale $(a_n(f)^*)$ repräsentativ sind,
- bezüglich jedes berechneten Mittelwertes der Peak-Frequenzen $(fmean_n)$ der ersten Peak-Frequenzsignale $(a_n(f))$ zu verifizieren, ob die korrespondierende Peak-Frequenz $(f_n{}^*)$ des zweiten Frequenzsignals $(a_n(f)^*)$ außerhalb des entsprechenden Bereiches von Frequenzwerten um den entsprechenden Mittelwert $(fmean_n)$ liegt,
- ein Fehlersignal $(s_{err})$ entsprechend des Ergebnisses des Verifizierungsschrittes g) zu erzeugen
- das Fehlersignal $(s_{err})$ von der Signalausgabeschnittstelle (22) zu der Ferneinheit (30) zu übermitteln.

**7.** System (1) gemäß Anspruch 6, wobei die Verarbeitungsmittel (23) konfiguriert sind, um den Mittelwert (fmean$_n$*) der Peak-Frequenzwerte (f$_n$(t)*) in dem zweiten Zeitraum ($\Delta t_2$) zu berechnen, um die korrespondierende Peak-Frequenz (f$_n$*) des zweiten Frequenzsignales (a$_n$(f)*) zu erhalten.

**8.** System (1) gemäß Anspruch 7, wobei die Verarbeitungsmittel (23) konfiguriert sind, um

- für jeden erfassten Peak, der in jedem zweiten Frequenzsignal (a$_n$(f)*) detektiert wurde, die zeitlichen Variationen der korrespondierenden Peak-Frequenz (f$_n$(t)*) in dem zweiten Zeitraum ($\Delta t_2$) zu bestimmen und
- für jeden der zweiten Frequenzpeaks (f$_n$*) den Mittelwert (fmean$_n$*) der Peak-Frequenzwerte (f$_n$(t)*) in dem zweiten Zeitraum ($\Delta t_2$) zu berechnen.

**9.** System (1) gemäß einem der Ansprüche 6 bis 8, wobei die Verarbeitungsmittel (23) konfiguriert sind, um eine exponentiell gewichtete gleitende Mittelwert (EWMA)-Funktion anzuwenden, um die korrespondierende Peak-Frequenz (f$_n$*) des zweiten Frequenzsignals (a$_n$(f)*) zu berechnen.

**Revendications**

**1.** Procédé de surveillance d'une structure mince (10), ayant une masse constante dans le temps et ayant une première extrémité libre et une deuxième extrémité opposée maintenue fermement sur un élément de base fixe, dans lequel une pluralité d'accéléromètres (A$_n$) est associée à ladite structure (10), chaque accéléromètre (A$_n$) étant adapté pour émettre un signal d'accélération (a$_n$(t)) représentatif de l'accélération détectée par l'accéléromètre, ledit procédé comprenant les étapes suivantes :

a) l'acquisition de premiers (a$_n$(t)) et deuxièmes (a$_n$(t)*) signaux d'accélération émis par les accéléromètres (A$_n$) respectivement dans une première ($\Delta t_1$) et une deuxième ($\Delta t_2$) période de temps, ladite deuxième période de temps ($\Delta t_2$) suivant ladite première période de temps ($\Delta t_1$),
b) l'application d'une fonction de transformation dans le domaine fréquentiel (FTT) aux premiers (a$_n$(t)) et deuxièmes (a$_n$(t)*) signaux d'accélération pour générer des premiers (a$_n$(f)) et deuxièmes (a$_n$(f)*) signaux de fréquence correspondants, représentatifs des composantes de fréquence des premiers (a$_n$(t)) et deuxièmes (a$_n$(t)*) signaux d'accélération correspondants,
c) la détection de premiers pics de fréquence (f$_n$) des premiers signaux de fréquence (a$_n$(f)), lesdits premiers pics de fréquence représentant les fréquences des pics de fréquence desdits premiers signaux de fréquence (a$_n$(f)) dans ladite première période de temps,
d) la détermination des variations temporelles des fréquences de crête de chacun des premiers pics de fréquence (f$_n$) pour obtenir l'évolution temporelle (f$_n$(t)) de chacun des premiers pics de fréquence (f$_n$) dans une plage prédéfinie de valeurs de fréquence sur ladite première période de temps, **caractérisé en ce que** le procédé comprend en outre :

e) le traitement desdites variations temporelles des fréquences de crête pour calculer, pour chacun des pics de fréquence (f$_n$), une valeur de référence de fréquence de crête moyenne (fmean$_n$) représentative de la fréquence d'oscillation de la structure (10) et une valeur statistique respective (fvar$_n$) représentative des variations de fréquence par rapport à ladite valeur de référence de fréquence de crête moyenne (fmean$_n$) pour définir une plage respective de valeurs de fréquence autour de ladite valeur moyenne (fmean$_n$),
f) la détection, au niveau de périodes de temps prédéterminées ($\Delta t$) dans ladite deuxième période de temps, de deuxièmes pics de fréquence (f$_n$*) des deuxièmes signaux de fréquence (a$_n$(f)*), lesdits deuxièmes pics de fréquence représentant les fréquences des pics de fréquence desdits deuxièmes signaux de fréquence (a$_n$(f)*),
g) la vérification, par rapport à chaque valeur moyenne calculée des fréquences de crête (fmean$_n$) des premiers signaux de fréquence de crête (a$_n$(f)), du fait que la fréquence de crête (f$_n$*) correspondante du deuxième signal de fréquence (a$_n$(f)*) est à l'extérieur de la plage respective de valeurs de fréquence autour de la valeur moyenne (fmean$_n$) respective,
h) la génération d'un signal d'erreur (s$_{err}$) en fonction du résultat de ladite étape de vérification g).

**2.** Procédé selon la revendication 1, dans lequel ladite étape g) comprend une étape g1) de calcul de la valeur moyenne (fmean$_n$*) des valeurs de fréquence de crête (f$_n$(t)*) dans ladite deuxième période de temps ($\Delta t_2$), pour obtenir ladite

fréquence de crête ($f_n$*) correspondante du deuxième signal de fréquence ($a_n$(f)*).

3. Procédé selon la revendication 2, dans lequel ladite étape g1) comprend l'étape de détermination, pour chaque pic détecté dans chaque deuxième signal de fréquence ($a_n$(f)*), des variations temporelles de la fréquence de crête ($f_n$(t)*) correspondante dans ladite deuxième période de temps ($\Delta t_2$) pour calculer, pour chacun des deuxièmes pics de fréquence ($f_n$*), ladite valeur moyenne (fmean$_n$*) des valeurs de fréquence de crête ($f_n$(t)*) dans ladite deuxième période de temps ($\Delta t_2$).

4. Procédé selon la revendication 2 ou 3, dans lequel ladite étape g) comprend une étape g2) de vérification, par rapport à chaque valeur moyenne calculée des fréquences de crête (fmean$_n$) des premiers signaux de fréquence de crête ($a_n$(f)), du fait que la valeur de fréquence de crête moyenne calculée (fmean$_n$*) correspondante du deuxième signal de fréquence ($a_n$(f)*) est à l'extérieur de la plage respective de valeurs de fréquence autour de la valeur moyenne (fmean$_n$) respective.

5. Procédé selon l'une quelconque des revendications 1 à 4, dans lequel, dans ladite étape g), ladite fréquence de crête ($f_n$*) correspondante du deuxième signal de fréquence ($a_n$(f)*) est calculée par le biais d'une fonction EWMA.

6. Système (1) de surveillance d'une structure mince (10), ayant une masse constante dans le temps et ayant une première extrémité libre (10a) et une deuxième extrémité opposée (10b) maintenue fermement sur un élément de base fixe (11), ledit système (1) comprenant :

- une pluralité d'accéléromètres ($A_n$) associée à ladite structure (10), chaque accéléromètre ($A_n$) étant adapté pour émettre un signal d'accélération ($a_n$(t)) représentatif de l'accélération détectée par l'accéléromètre,
- une unité d'acquisition et de traitement (20) en communication de signal avec lesdits accéléromètres ($A_n$) et positionnée au niveau de la structure (10) à surveiller,
- une unité à distance (30) en communication de signal avec ladite unité d'acquisition et de traitement (20), dans lequel
- ladite unité d'acquisition et de traitement (20) comprend :

- une interface d'entrée de signal (21) couplée aux accéléromètres ($A_n$) pour recevoir les signaux d'accélération ($a_n$(t)) émis par les accéléromètres ($A_n$),
- des moyens de traitement (23) couplés à l'interface d'entrée de signal (21) pour recevoir et traiter les signaux d'accélération ($a_n$(t)) émis par les accéléromètres ($A_n$) et générer en sortie une pluralité de signaux de sortie représentatifs de l'état de la structure (10),
- une interface de sortie de signal (22) couplée aux moyens de traitement (23) pour recevoir les signaux de sortie et en communication de signal avec ladite unité à distance (30) pour transmettre lesdits signaux de sortie à l'unité à distance (30), lesdits moyens de traitement (23) étant configurés pour :

- acquérir des premiers ($a_n$(t)) et deuxièmes ($a_n$(t)*) signaux d'accélération émis par les accéléromètres ($A_n$) respectivement dans une première ($\Delta t_1$) et une deuxième ($\Delta t_2$) période de temps, ladite deuxième période de temps ($\Delta t_2$) suivant ladite première période de temps ($\Delta t_1$),
- appliquer une fonction de transformation dans le domaine fréquentiel (FTT) aux premiers ($a_n$(t)) et deuxièmes ($a_n$(t)*) signaux d'accélération pour générer des premiers ($a_n$(f)) et deuxièmes ($a_n$(f)*) signaux de fréquence représentatifs des composantes de fréquence des premiers ($a_n$(t)) et deuxièmes ($a_n$(t)*) signaux d'accélération correspondants,
- détecter des premiers pics de fréquence ($f_n$) des premiers signaux de fréquence ($a_n$(f)), lesdits premiers pics de fréquence représentant les fréquences des pics de fréquence desdits premiers signaux de fréquence ($a_n$(f)) dans ladite première période de temps,
- déterminer les variations temporelles des fréquences de crête de chacun des premiers pics de fréquence ($f_n$) pour obtenir l'évolution temporelle ($f_n$(t)) de chacun des premiers pics de fréquence ($f_n$) dans une plage prédéfinie de valeurs de fréquence sur ladite première période de temps, **caractérisé en ce que** lesdits moyens de traitement (23) sont configurés en outre pour :

- traiter lesdites variations temporelles des fréquences de crête pour calculer, pour chacun des pics de fréquence ($f_n$), une valeur de référence de fréquence de crête moyenne (fmean$_n$) représentative de la fréquence d'oscillation de la structure (10) et une valeur statistique respective (fvar$_n$) représentative des variations de fréquence par rapport à ladite valeur de référence de fréquence de crête moyenne (fmean$_n$) pour définir une plage respective de valeurs de fréquence autour de

ladite valeur moyenne (fmean$_n$),

- détecter, au niveau de périodes de temps prédéterminées ($\Delta t$) dans ladite deuxième période de temps, des deuxièmes pics de fréquence ($f_n$*) des deuxièmes signaux de fréquence ($a_n(f)$*), lesdits deuxièmes pics de fréquence représentant les fréquences des pics de fréquence desdits deuxièmes signaux de fréquence ($a_n(f)$*),

- vérifier, par rapport à chaque valeur moyenne calculée des fréquences de crête (fmean$_n$) des premiers signaux de fréquence de crête ($a_n(f)$), le fait que la fréquence de crête ($f_n$*) correspondante du deuxième signal de fréquence ($a_n(f)$*) est à l'extérieur de la plage respective de valeurs de fréquence autour de la valeur moyenne (fmean$_n$) respective,

- générer un signal d'erreur ($s_{err}$) en fonction du résultat de ladite étape de vérification g),

- transmettre à partir de ladite interface de sortie de signal (22) ledit signal d'erreur ($s_{err}$) à ladite unité à distance (30).

7.  Système (1) selon la revendication 6, dans lequel lesdits moyens de traitement (23) sont configurés pour calculer la valeur moyenne (fmean$_n$*) des valeurs de fréquence de crête ($f_n(t)$*) dans ladite deuxième période de temps ($\Delta t_2$), pour obtenir ladite fréquence de crête ($f_n$*) correspondante du deuxième signal de fréquence ($a_n(f)$*).

8.  Système (1) selon la revendication 7, dans lequel lesdits moyens de traitement (23) sont configurés pour :

- déterminer, pour chaque pic détecté dans chaque deuxième signal de fréquence ($a_n(f)$*), les variations temporelles de la fréquence de crête ($f_n(t)$*) correspondante dans ladite deuxième période de temps ($\Delta t_2$) et

- calculer, pour chacun des deuxièmes pics de fréquence ($f_n$*), ladite valeur moyenne (fmean$_n$*) des valeurs de fréquence de crête ($f_n(t)$*) dans ladite deuxième période de temps ($\Delta t_2$).

9.  Système (1) selon l'une quelconque des revendications 6 à 8, dans lequel lesdits moyens de traitement (23) sont configurés pour appliquer une fonction de moyenne mobile pondérée exponentiellement (EWMA) pour calculer ladite fréquence de crête ($f_n$*) correspondante du deuxième signal de fréquence ($a_n(f)$*).

$A_1$ $A_2$

10

$A_3$ $A_4$

1

30

$A_5$ $A_6$

20

21 23 22

FIG.1

EP 2 454 576 B1

Fig. 2

Frequenza (Hz)

Fig. 3

Fig. 4

Fig.5

**EP 2 454 576 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1953521 A

- EP 1517141 A1